Europäisches Patentamt

European Patent Office

Office européen des brevets

(11) Publication number: **0 147 201**
**B1**

## EUROPEAN PATENT SPECIFICATION

(45) Date of publication of patent specification: **09.11.88**

(51) Int. Cl.⁴: **B 60 K 41/02, F 16 D 27/16**

(21) Application number: **84308992.1**

(22) Date of filing: **20.12.84**

(54) System for controlling the clutch torque of an electromagnetic clutch for a vehicle.

(30) Priority: **27.12.83 JP 251022/83**

(43) Date of publication of application:
**03.07.85 Bulletin 85/27**

(45) Publication of the grant of the patent:
**09.11.88 Bulletin 88/45**

(84) Designated Contracting States:
**AT CH DE FR GB IT LI NL SE**

(56) References cited:
**EP-A-0 092 950**
**FR-A-1 152 653**
**FR-A-1 267 930**
**FR-A-2 525 163**
**GB-A- 999 643**
**GB-A-1 028 964**
**GB-A-2 080 910**
**JP-A-57 015 023**

(73) Proprietor: **FUJI JUKOGYO KABUSHIKI KAISHA**
**7-2 Nishishinjuku 1-chome Shinjuku-ku**
**Tokyo (JP)**

(73) Proprietor: **Van Doorne's Transmissie B.V.**
**Dr. Hub van Doorneweg 120 Postbus 500**
**NL-5026 RA Tilburg (NL)**

(72) Inventor: **Sakakiyama, Ryuzo**
**1-21 Takamatsu Toshima-ku**
**Tokyo (JP)**

(74) Representative: **Kirk, Geoffrey Thomas et al**
**BATCHELLOR, KIRK & EYLES 2 Pear Tree Court**
**Farringdon Road**
**London EC1R 0DS (GB)**

Courier Press, Leamington Spa, England.

## Description

The present invention relates to a system for controlling the clutch torque of an electromagnetic clutch disposed between an engine and the transmission of a motor vehicle.

A clutch torque control system for controlling the starting of a vehicle is disclosed in Japanese Patent Publication No. 57-15023, for example. In that system, the clutch current flowing in the coil of the clutch increases exponentially with respect to the increase of the engine speed when starting the vehicle from rest. When the vehicle speed reaches a predetermined speed (for example 20 km/h), a rated current (lock-up current) flows through the coil, so that the clutch is fully engaged. During deceleration of the vehicle, when the vehicle speed decreases below the predetermined speed, the clutch current is cut off to disengage the clutch.

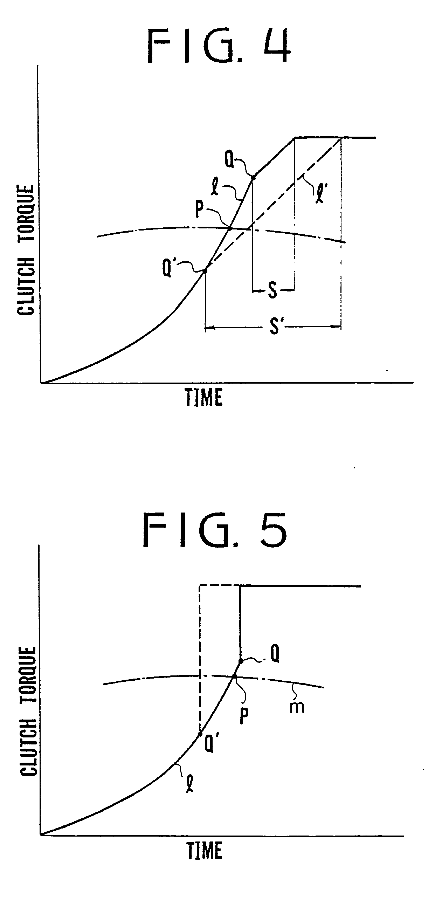

Figure 5 shows a clutch torque characteristic of an electromagnetic clutch. When the clutch torque exceeds a stall point P on a clutch torque line I, the clutch is substantially engaged. On the other hand, when the speed of the vehicle reaches a predetermined value (20 km/h), the clutch is fully engaged. If the rated current flows at a point Q above the stall point P, the clutch is smoothly engaged without shock. However, in a transmission system combining an electromagnetic clutch with a belt-drive infinitely variable transmission, the transmission ratio is changed to a lower value when the depression of the accelerator pedal is small, resulting in a low engine speed and a low clutch torque. In such a system, when the speed of the vehicle exceeds the predetermined value at low transmission ratio, the clutch is engaged at a low clutch torque point Q' below the stall point P. Accordingly, the clutch torque rises from the point Q' as shown in dashed line. Since the clutch torque rapidly rises from a low clutch torque state and hence the clutch is rapidly engaged, the system is subject to high shock, causing undesirable problems for the vehicle.

GB—A—1028964 discloses a control system for an electromagnetic clutch as set out in the precharacterising part of claim 1. In GB—A—1028964 the clutch engagement current increases from zero to a rated current with increasing of engine speed. Means responsive to the output of a vehicle speed detecting means are provided for increasing the clutch current up to the rated current and when the vehicle speed exceeds a predetermined value the characteristic of the clutch engagement current is softened in comparison with the characteristic of the current produced in a vehicle speed range below said predetermined value. The softening characteristic is both subordinate to time and engine speed.

An object of the present invention is to provide a system which controls the clutch current so as to engage an electromagnetic clutch gradually to prevent the occurrence of shock caused by a rapid engagement of the clutch at low engine speed.

In accordance with the present invention, there is provided, a system for controlling clutch torque of an electromagnetic clutch for a vehicle having an engine and a transmission, the electromagnetic clutch being operatively connected between the engine and the transmission and being supplied with clutch current which increases with increasing of engine speed, the system comprising: first means for sensing the speed of the engine for producing an engine speed signal as a function of the engine speed, an acceleration detecting switch for producing an acceleration signal at the depression of an accelerator pedal, vehicle speed detecting means for sensing speed of the vehicle and producing an output when the vehicle speed exceeds a predetermined value, and characterised by second means responsive to the output of the vehicle speed detecting means and to the acceleration signal for increasing the clutch current up to a rated current of the clutch at a predetermined rate of increase smaller than a rate of increase determined by engine speed at the generation of the output of the vehicle speed detecting means.

The invention will be more rapidly understood by way of example from the following description of a clutch control system, reference being made to Figures 1 to 4 of the accompanying drawings, in which

Figure 1 is a schematic diagram illustrating the system;

Figures 2a and 2b are flow charts of routines of a microprocessor employed in the system;

Figure 3 is a graph showing ranges of clutch current variation; and

Figures 4 and 5 are graphs showing clutch torques in the system of Figures 1 to 3 and in a previously known system, respectively.

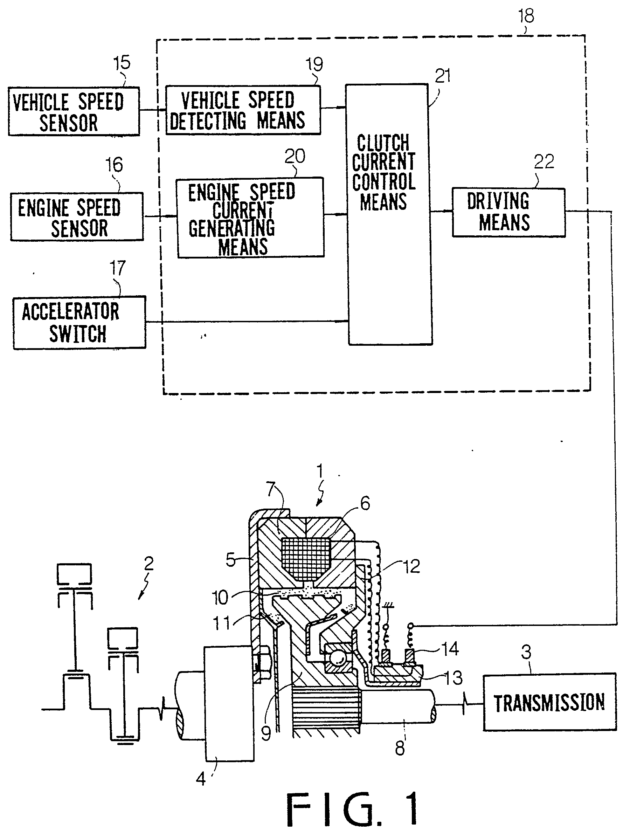

Referring to Figure 1, an electromagnetic powder clutch 1 is provided for transmitting power of an engine 2 to the wheels (not shown) of a vehicle through a belt-drive infinitely variable transmission 3. The electromagnetic powder clutch 1 comprises a drive member 7 connected to a crankshaft 4 of the engine 2 through a drive plate 5, a coil 6 provided in the drive member 7, a driven member 9 having its outer periphery spaced from the inner periphery of the drive member 7 by a gap 10, and a powder chamber 11 defined between the drive member 7 and driven member 9. The powder chamber 11 is filled with powder of magnetic material. The driven member 9 is secured to an input shaft 9 of the belt-drive infinitely variable transmission 3. A holder 12 secured to the drive member 7 carries slip rings 13 which are electrically connected to the coil 6. The coil 6 is supplied through brushes 14 and slip rings 13 with a clutch current from a control unit 18.

When the magnetizing coil 6 is excited by the clutch current, drive member 7 is magnetized to produce a magnetic flux passing through the driven member 9. The magnetic powder is aggregated in the gap 10 by the magnetic flux and the driven member 9 is engaged with the drive member 7 by the powder. On the other hand, when the clutch current is cut off, the drive and driven members 7 and 9 are disengaged from one another. The transmission ratio of the belt-drive infinitely variable transmission 3 is determined in dependency on the engine speed and the vehicle speed. When the vehicle speed is lower than a predetermined low value, the transmission ratio is at the highest ratio (i.e. a low gear position). When the engine speed is at high value, the transmission ratio becomes low (i.e. a high gear position).

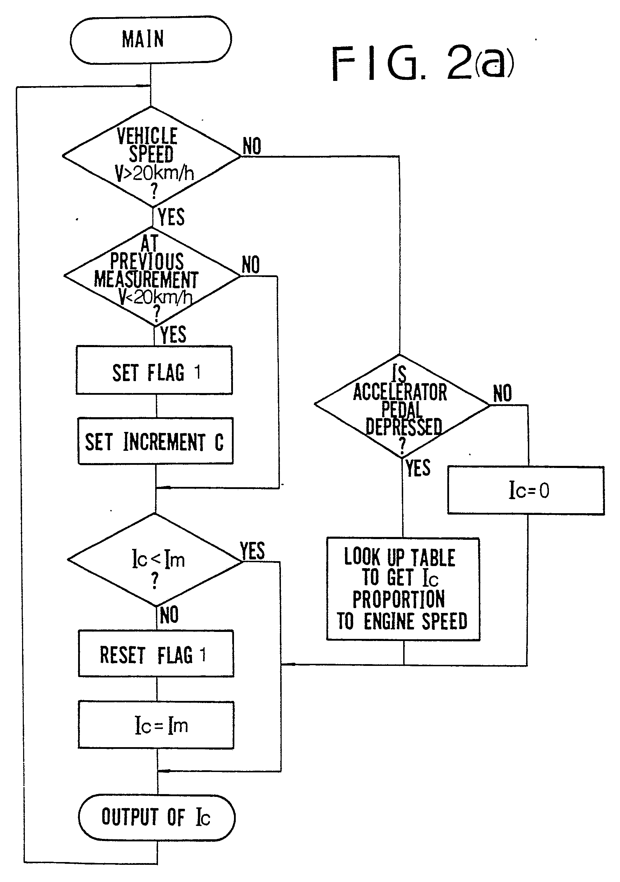

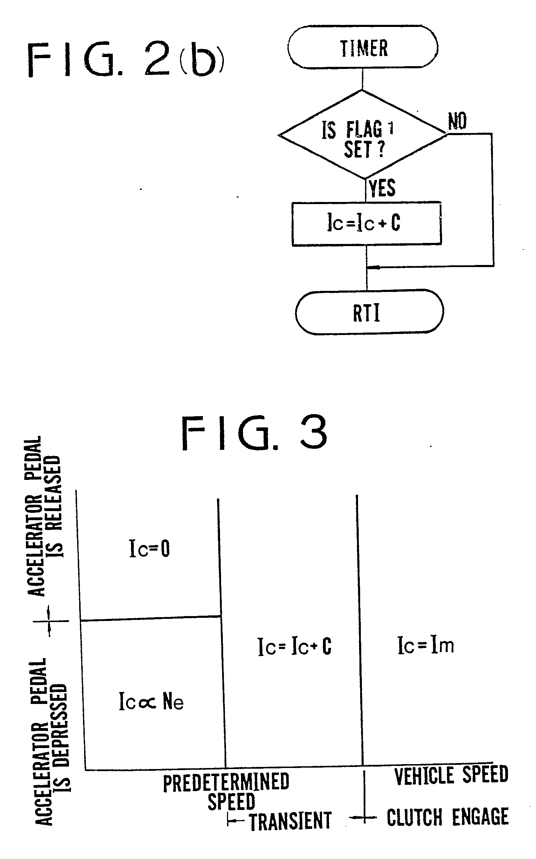

The control unit 18 comprises a microcomputer which includes a vehicle speed detecting means 19, an engine speed current generating means 20, a clutch current control means 21, and a driving means 22. The vehicle speed detecting means 19 is supplied with a vehicle speed signal from a vehicle speed sensor 15 and produces an output, when the vehicle speed exceeds a predetermined value (20 km/h). The engine speed current generating means 20 is supplied with a signal from an engine speed sensor 16 and produces an output proportional to the engine speed. An accelerator switch 17 produces an output when the vehicle accelerator pedal is depressed. The clutch current control means 21 is fed with the outputs from the vehicle speed detecting means 19, the engine speed current generating means 20 and the accelerator switch 17 and produces a clutch current dependent on driving conditions. The clutch current control means 21 operates in accordance with flow charts of Figures 2a and 2b.

Figures 2a and 2b are the flow charts of respectively a main routine and an interrupt routine, while Figure 3 shows the variation of the clutch current. The operation of the system is now described hereinafter referring to those figures. When the accelerator pedal is not depressed and the vehicle speed is below a predetermined value, e.g. 20 km/h, the clutch current is zero to disengage the clutch (Ic=0). When the accelerator pedal is depressed, the clutch current increases proportionally with increase of the engine speed. When the vehicle speed is higher than the predetermined speed and the previously measured speed is lower than the predetermined speed, a flag 1 is set, indicating that the clutch current comes into a transient state. The clutch current is then controlled by the interrupt routine of Figure 2b. That is, a certain current increment C is added to a previous current IC at regular intervals in dependence on a timer. Accordingly, the clutch current Ic gradually increases progressively at a rate determined by the increment C. Thus, the clutch is gradually engaged in dependence on the clutch current during the transient state. When the clutch current reaches a rated current (Im), the clutch is fully engaged and the flag 1 is reset.

Referring to Figure 4, the solid line I shows the variation in clutch torque, when the vehicle speed reaches the predetermined speed at a point Q above the stall point P. When the vehicle speed reaches the predetermined value at a point Q' below the stall point P, the clutch torque gradually increases at a rate dependent on the increment C as shown by line I' during a period S' longer than a period S for the normal clutch engagement.

From the foregoing, it will be understood that the present invention provides a system which controls clutch current so that the latter is gradually increased, and shock otherwise caused by the rapid engagement of the clutch can be avoided.

## Claims

1. A system for controlling clutch torque of an electromagnetic clutch (1) for a vehicle having an engine (2) and a transmission (3), the electromagnetic clutch being operatively connected between the engine and the transmission and being supplied with clutch current which increases with increasing of engine speed, the system comprising: first means (16, 20) for sensing the speed of the engine for producing an engine speed signal as a function of the engine speed, an acceleration detecting switch (17) for producing an acceleration signal at the depression of an accelerator pedal, vehicle speed detecting means (15, 19) for sensing speed of the vehicle and producing an output when the vehicle speed exceeds a predetermined value, and characterised by second means (21) responsive to the output of the vehicle speed detecting means and to the acceleration signal for increasing the clutch current up to a rated current of the clutch at a predetermined rate of increase smaller than a rate of increase determined by engine speed at the generation of the output of the vehicle speed detecting means.

2. A system according to claim 1, wherein first means comprises an engine speed sensor (16) and an engine speed current generating means (20) responsive to the output of the engine speed sensor (16) for producing the engine speed signal.

3. A system according to claim 2, wherein said first and second means are constituted at least in part by a microcomputer (18).

## Patentansprüche

1. Steuerungssystem für das Kupplungsmoment einer elektromagnetischen Kupplung (1), eines Fahrzeugs mit einem Motor (2) und einem Getriebe (3), welche elektromagnetische Kupplung zwischen dem Motor und dem Getriebe angeordnet ist und deren Kupplungsstrom mit steigender Motordrehzahl ansteigt; mit einer ersten Einrichtung (16, 20), die die Motordrehzahl mißt und ein Motordrehzahlsignal als Funktion der Motordrehzahl erzeugt; einem Gaspedalschalter (17), der bei Betätigung des Gaspedals ein Betätigungssignal erzeugt; eine Fahrzeuggeschwindigkeitsdetektoranordnung (15, 19), die die Fahrzeuggeschwindigkeit feststellt und ein Ausgangssignal erzeugt, wenn die Fahrzeuggeschwindigkeit einen vorbestimmten Wert überschreitet; gekennzeichnet durch eine zweite Einrichtung, die auf das Ausgangssignal der Fahrzeuggeschwindigkeitdetektoranordnung und auf das Betätigungssignal anspricht, um den Kupplungsstrom bis zu einem Nennstrom der Kupplung mit einer vorbestimmten Geschwindigkeitssteigerungsrate ansteigen zu lassen, die kleiner als eine Steigerungsrate ist, die durch die Motordrehzahl bei der Erzeugung des Ausgangssignals der Fahrzeuggeschwindigkeitsdetektoranordnung bestimmt wird.

2. Steuerungssystem nach Anspruch 1, dadurch gekennzeichnet, daß die erste Einrichtung einen Motordrehzahlsensor (16) und einen Motordrehzahl-Stromgenerator (20) aufweist, der auf den Ausgang des Motordrehzahlsensors (16) anspricht und das Motordrehzahlsignal erzeugt.

3. Steuerungssystem nach Anspruch 2, dadurch gekennzeichnet, daß die erste und die zweite Einrichtung wenigstens teilweise von einem Mikrocomputer (18) gebildet sind.

**Revendications**

1. Système pour commander le moment ou le couple d'un embrayage électromagnétique (1) pour un véhicule possédant un moteur (2) et une transmission (3), l'embrayage électromagnétique étant effectivement monté entre le moteur et la transmission et alimenté avec un courant d'embrayage qui augmente en même temps que la vitesse du moteur, système qui comprend des premiers moyens (16, 20) pour mesurer la vitesse du moteur afin de produire un signal de vitesse de moteur qui est fonction de la vitesse de celui-ci, un commutateur d'accélérateur (17) pour produire un signal qui est fonction de l'abaissement de la pédale d'accélérateur, un détecteur de vitesse de véhicule (15, 19) pour mesurer la vitesse du véhicule et produire un signal de sortie quand cette vitesse dépasse une valeur prédéterminée, caractérisé par des seconds moyens (21) qui, en réponse au signal de sortie du détecteur de vitesse de véhicule et du signal d'accélérateur, augmente l'intensité du courant d'embrayage jusqu'à une valeur donnée à une cadence prédéterminée plus petite que la cadence d'augmentation déterminée par la vitesse du moteur engendrant le signal de sortie de détecteur de vitesse du véhicule.

2. Système selon la revendication 1, caractérisé en ce que les premiers moyens comprennent un senseur de vitesse de moteur (16) et un générateur de courant de vitesse de moteur (20) qui, en réponse au signal de sortie du senseur de vitesse de moteur (16) produisent le signal de vitesse de moteur.

3. Système selon la revendication 2, caractérisé en ce que le premier et le second moyens sont constitués, au moins en partie, par un micro-ordinateur (18).

FIG. 1

0 147 201

# F I G. 2(a)

```
          ┌─────────────┐
          │    MAIN      │
          └──────┬──────┘
                 │
            ╱────────╲
           ╱ VEHICLE  ╲      NO
          ╱   SPEED    ╲────────────┐
          ╲ V>20km/h   ╱            │
           ╲    ?     ╱             │
            ╲────────╱              │
              │ YES                 │
            ╱────────╲              │
           ╱   AT     ╲    NO        │
          ╱ PREVIOUS   ╲──────┐     │
          ╲MEASUREMENT ╱      │     │
           ╲ V<20km/h ╱       │     │
            ╲   ?    ╱        │     │
              │ YES           │     │
       ┌──────────────┐       │  ╱────────╲
       │  SET FLAG 1  │       │ ╱    IS     ╲   NO
       └──────┬───────┘       │╱ ACCELERATOR ╲──────┐
              │               ╲   PEDAL      ╱      │
       ┌──────────────┐        ╲ DEPRESSED  ╱       │
       │SET INCREMENT C│        ╲   ?      ╱        │
       └──────┬───────┘          │ YES          ┌────────┐
              │                  │              │ Ic=0   │
              ├──────────────┐   │              └────┬───┘
         ╱────────╲          │   │                   │
        ╱          ╲  YES     │ ┌──────────────┐     │
       ╱  Ic < Im   ╲─────┐   │ │ LOOK UP TABLE│     │
       ╲     ?      ╱     │   │ │  TO GET Ic   │     │
        ╲          ╱      │   │ │  PROPORTION  │     │
         ╲────────╱       │   │ │TO ENGINE SPEED│    │
           │ NO           │   │ └──────┬───────┘     │
       ┌──────────────┐   │   │        │             │
       │ RESET FLAG 1 │   │   └────────┴─────────────┘
       └──────┬───────┘   │
              │           │
       ┌──────────────┐   │
       │   Ic = Im    │   │
       └──────┬───────┘   │
              ├───────────┘
       ┌──────────────┐
       │ OUTPUT OF Ic │
       └──────────────┘
```

2

# FIG. 2(b)

```
      TIMER

   IS FLAG 1        NO
     SET ?

      YES

    Ic=Ic+C

      RTI
```

# FIG. 3

```
ACCELERATOR PEDAL
IS RELEASED

              Ic=0

              |              |
  Ic∝Ne       |  Ic=Ic+C     |   Ic=Im

ACCELERATOR PEDAL
IS DEPRESSED
           PREDETERMINED              VEHICLE SPEED
              SPEED
                  ↳TRANSIENT ⊣ CLUTCH ENGAGE
```

# FIG. 4

CLUTCH TORQUE

TIME

# FIG. 5

CLUTCH TORQUE

TIME